# EUROPÄISCHE PATENTSCHRIFT

(11) **EP 0 968 057 B1**
(45) Veröffentlichungstag und Bekanntmachung des Hinweises auf die Patenterteilung: **30.07.2003**
(21) Anmeldenummer: 98910643.0
(22) Anmeldetag: 11.02.1998
(51) Int. Cl.: B01L 3/00, B01L 7/00, G01N 21/25

(54) **MICROPLATTE MIT TRANSPARENTEM BODEN**
MICROPLATE WITH TRANSPARENT BASE
MICROPLAQUE A FOND TRANSPARENT

(30) Priorität: 25.03.1997 DE 19712484
(43) Veröffentlichungstag der Anmeldung: 05.01.2000
(73) Patentinhaber: Greiner Bio-One GmbH, 72636 Frickenhausen (DE)
(72) Erfinder: KNEBEL, Günther, D-72622 Nürtingen (DE)
(74) Vertreter: Schrell, Andreas, Dr.
(86) Internationale Anmeldenummer: EP9800749
(87) Internationale Veröffentlichungsnummer: WO98042442

(56) Entgegenhaltungen:
- EP-A- 0 571 661
- EP-A- 0 723 812
- US-A- 4 948 442
- US-A- 5 487 872
- US-A- 5 508 197

## Beschreibung

Die Erfindung betrifft eine Microplatte besonders hoher Packungsdichte mit transparentem Boden sowie ein Verfahren zu deren Herstellung.

Microplatten, die für Fluoreszenz-, Lumineszenzoder Szintillations-Messungen, beispielsweise in biochemischen oder molekularbiologischen Fragestellungen eingesetzt werden, sind bekannt.

Neuere Lumineszenz- und Fluoreszenztechniken erfordern die Bereitstellung eingefärbter Microplatten mit transparentem Boden. Microplatten mit sechsundneunzig Vertiefungen stellen heute eine standardisierte Plattform für die automatische oder manuelle Bestimmung und Auswertung von Patientenproben in weitverbreiteten Analysegeräten dar. Eine gängige Methode für die Herstellung von eingefärbten Microplatten mit transparentem Boden ist die Ultraschallverschweißung eines eingefärbten Plattenrahmens mit einem transparenten Boden. Beide Teile werden vorzugsweise aus Polystyrol hergestellt. Problematisch zeigt sich jedoch immer wieder die absolute Abdichtung der sechsundneunzig Vertiefungen gegeneinander. Vielfach werden deshalb auch doppelte Schweißrippen angebracht, um eine größere Sicherheit zu erlangen.

Die EP 0 571 661 A1 offenbart eine Microplatte, die in Meßtechniken eingesetzt werden kann, bei denen Lichtemission oder Lichtdurchlässigkeit bestimmt wird. Die offenbarte Microplatte umfaßt ein küvettenbildendes oberes lichtundurchlässiges Rahmenteil sowie ein lichtdurchlässiges Bodenteil, das mittels Ultraschalleinsatzes an das obere Rahmenteil angeschweißt wurde. Bekannt sind auch Varianten dieser Microplatten, bei denen unterhalb des transparenten Bodenteils ein aus nicht transparentem Material hergestelltes Schutzgitter angebracht ist, das optische Fenster freiläßt. Bekannt ist es auch, derartige Microplatten in Mehrkomponenten-Spritzgießverfahren herzustellen, wobei mittels zweier Spritzformen die Rahmen- und Bodenteile hergestellt und zusammengefügt werden.

Bei den bekannten Microplatten erweist sich als Nachteil, daß die transparenten Bodenteile aufgrund ihrer Dicke von circa 1 mm unerwünschte, auf Lichtbrechung und Totalreflexion beruhende Lichtleitungseffekte aufweisen. Totalreflexion tritt immer dann auf, wenn Licht aus einem optisch dichteren Medium auf die Grenzfläche eines optisch dünneren fällt und der materialspezifische Grenzwinkel überschritten wird. Diese Eigenschaft wird heute bei der Lichtleitungstechnologie wirkungsvoll genutzt. Licht wird an dem einen Ende in den Lichtleiter eingespeist, durchläuft ihn aufgrund von Totalreflexion und kann am anderen Ende nahezu ungeschwächt wieder austreten. Dazu müssen die Wände der Fasern aber in optischen Dimensionen absolut glatt sein. Ist dies nicht der Fall, wie bei spritzgegossenen Teilen, so wird bei jeder Reflexion das Licht nur teilweise totalreflektiert und kann deshalb in benachbarten Vertiefungen beziehungsweise Küvetten austreten. Der unerwünschte Lichtleitungseffekt tritt beispielsweise auch bei Durchlichtmessungen auf und zeichnet sich also unter anderem dadurch aus, daß der transparente Boden als Lichtleiter wirkt und für eine bestimmte Küvette eingestrahltes Licht in benachbarte Küvetten teilweise ablenkt. Dabei stellt man fest, daß mit zunehmender Dicke des Bodens auch der Lichtleitungseffekt zunimmt, das heißt die Meßgenauigkeit abnimmt. Zudem sind die bekannten Microplatten, ebenfalls aufgrund der Dicke ihrer transparenten Böden, nur bedingt für Radioaktivitäts-Messungen, zum Beispiel Szintillations-Messungen, geeignet.

Das der vorliegenden Erfindung zugrundeliegende technische Problem liegt also darin, Microplatten bereitzustellen, die die vorgenannten Nachteile überwinden, insbesondere bei möglichst hoher Pakkungsdichte, das heißt, einer möglichst hohen Anzahl von Vertiefungen pro Microplatte, eine höhere Genauigkeit bei den optischen Messungen gewährleisten und überdies auch für radioaktive Bestimmungen geeignet sind.

Die Erfindung löst dieses Problem durch die Bereitstellung einer Microplatte mit den Merkmalen des Hauptanspruchs sowie eines verfahrens gemäß anspruch 17. Das bodenteil beziehungsweise die Böden der Küvetten weisen eine Dicke von maximal 500 µm, vorzugsweise 20 - 500 µm, besonders bevorzugt 40 bis 100 µm, auf.

Im Zusammenhang mit der vorliegenden Erfindung wird unter einem Rahmenteil einer Microplatte das Teil einer Microplatte verstanden, das die nach oben und unten hin offenen Küvetten oder Vertiefungen, insbesondere deren Seitenwände, ausbildet. Unter dem Bodenteil einer Microplatte wird das die Küvetten und gegebenenfalls die Küvettenzwischenräume nach unten abschließende Teil einer Microplatte verstanden.

Im Zusammenhang mit der vorliegenden Erfindung wird unter einer Küvette ein aus einem beliebigen Material, vorzugsweise Kunststoff, hergestelltes Gefäß verstanden, das als Näpfchen, Vertiefung, Bohrung, Aushöhlung oder Ähnliches ausgebildet sein kann und der Aufnahme von zu untersuchenden Proben dient.

In besonders bevorzugter Weise sind das gesamte Bodenteil oder nur die Teile des Bodenteils, die die Böden der Küvetten bilden, als Membran oder, insbesondere transparente, Folie ausgeführt. Im Zusammenhang mit der vorliegenden Erfindung wird unter einer Folie eine dünne, vorzugsweise flexible, Materialschicht verstanden, die keinerlei Durchbrechungen, Löcher oder ähnliches aufweist, und demgemäß luft- und flüssigkeitsundurchlässig ist. Eine Folie weist also keine Filterfunktion auf.

Die Erfindung stellt also in vorteilhafter Weise eine Microplatte zur Verfügung, die aufgrund der nur sehr geringen Dicke des Bodenteils beziehungsweise der Böden der küvetten eine Vielzahl von Vorteilen und Anwendungen ermöglicht. Aufgrund der geringen Dicke des Bodenteils beziehungsweise der Böden der einzelnen Küvetten ist es beispielsweise besonders vorteilhaft möglich, Radioaktivitätsbestimmungen durchzuführen. Sofern das Bodenteil als transparente Folie ausgeführt ist, ergibt sich der Vorteil, daß der unerwünschte Lichtleitungseffekt erheblich reduziert wird, so daß die Messungen mit gegenüber dem Stand der Technik erheblich vergrößerter Genauigkeit durchgeführt werden können. Sofern das Bodenteil als Membran ausgeführt wird, kann eine gegebenenfalls erwünschte Nährstoffdiffusion von unten durch die Membran hindurch in die auf der Membran in der Küvette wachsenden Zellen besonders effizient und weitgehend ungehindert erfolgen.

Die erfindungsgemäßen Microplatten eignen sich daher für jedwede Art von Fluoreszenz-, Lumineszenz-, colorimetrischen, Chemilumineszenz- oder Radioaktivitätsmessungen, zum Beispiel Szintillationsmessungen. Die erfindungsgemäßen Microplatten können in ELISA-Tests, DNA- und RNA-Hybridisierungen, Antikörpertiterbestimmungen, Protein-, Peptid-, Immuno-Tests, PCR- und rekombinanten DNA-Techniken, Hormon- und Rezeptor-Bindetests und ähnlichem eingesetzt werden. Da in bevorzugter Weise vorgesehen ist, das Bodenteil beziehungsweise die Böden der einzelnen Küvetten transparent, also lichtdurchlässig, auszuführen, können optische Geräte sowohl oberhalb als auch unterhalb der Microplatte angeordnet werden. Zudem ist es möglich, die in den Küvetten enthaltenen Proben lichtmikroskopisch zu untersuchen.

Die erfindungsgemäße Microplatte weist mindestens ein Rahmenteil und mindestens ein dem Rahmenteil zugeordnetes Bodenteil auf. Das mindestens eine Rahmenteil ist vorzugsweise im wesentlichen rechteckig ausgeführt und umfaßt eine Vielzahl von nach oben und unten offenen Küvetten in einer Stützplatte, wobei die Seitenwände der Küvetten von dem in diesem Bereich als Stützplatte ausgeführten Rahmenteil gebildet werden. Die in dem Rahmenteil ausgebildeten Küvetten können im Querschnitt kreisförmig, sechseckig, quadratisch oder anders geometrisch ausgebildet sein. Die Küvetten sind in der Stützplatte des Rahmenteils matrixförmig oder in Reihe angeordnet. Die Küvetten können in der Stützplatte als beispielsweise durch Stege miteinander verbundene distinkte Einzelküvetten, als Bohrungen in einer ansonsten massiven Stützplatte oder als Kombination von beiden ausgeführt sein.

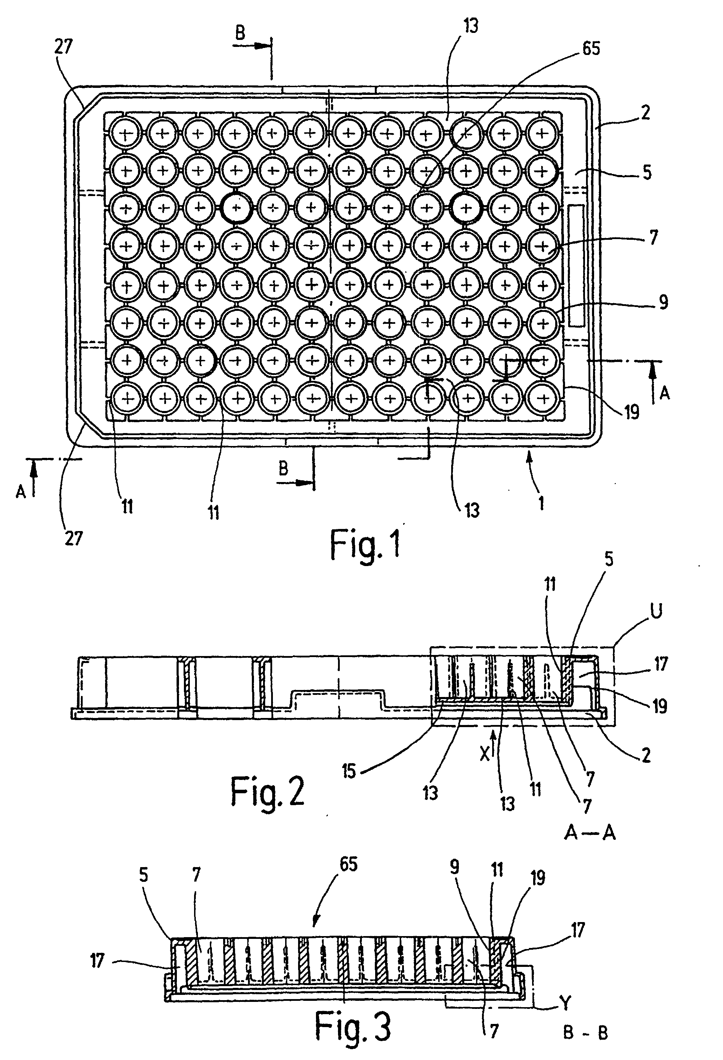

Die Erfindung sieht Microplatten mit hoher Packungsdichte vor, das heißt Microplatten, die Standardabmessungen aufweisen, gleichzeitig aber sehr viele Küvetten beinhalten. Es ist vorgesehen, daß die erfindungsgemäße Microplatte mit Standardabmessung (SBS-Standardabmessung, vergleiche Beschreibung zu Figur 1) mindestens 384 Küvetten aufweist. Selbstverständlich sind auch darüber liegende Anzahlen von Küvetten pro Microplatte möglich. Pro Rahmenteil können also zum Beispiel Vielfache von sechs, zwölf, vierundzwanzig, achtundvierzig. oder sechsundneunzig, beispielsweise in besonders vorteilhafter Ausführung 384, 768, 864, 1536 oder 6144, Küvetten vorhanden sein.

Das Rahmenteil wird im Spritzgießverfahren auf das maximal 500 µm dicke Bodenteil aufgebracht, das somit die Küvetten von unten verschließt und gleichsam für jede einzelne Küvette den Boden bereitstellt. Die erfindungsgemäße Microplatte kann beispielsweise aus einem solchen Rahmenteil und einem diesem Rahmenteil zugeordneten Bodenteil bestehen. Erfindungsgemäß kann jedoch auch vorgesehen sein, ein oder vorzugsweise mehrere Rahmenteile herausnehmbar in einem in der Mitte offenen Grundrahmen anzuordnen. Eine derartige Microplatte umfaßt demgemäß einen Grundrahmen und in dem Grundrahmen angeordnete, jeweils mit einem Bodenteil versehene Rahmenteile.

Die Erfindung sieht in einer weiteren bevorzugten Ausführungsform vor, das Rahmenteil weiß oder schwarz einzufärben oder auch transparent beziehungsweise naturfarben auszuführen. In besonders bevorzugter Weise ist vorgesehen, das Rahmenteil aus einem Materialtyp oder einem Materialgemisch herzustellen, das eine erhöhte Wärmeleitfähigkeit gewährleistet, beispielsweise durch Einschluß von Metallspänen, wie Nickel- oder Edelstahlspänen oder von Ruß.

Die Erfindung sieht in einer besonders bevorzugten Ausführungsform vor, das Rahmenteil aus Acrylbutadienstyrol (ABS), Polyamid (PA), Polycarbonat (PC), Polystyrol (PS), Polymethylmethacrylat (PMMA), Polypropylen (PP) oder Styrolacrylnitril (SAN) herzustellen.

Die Erfindung sieht in einer weiteren vorteilhaften Ausgestaltung vor, die Folie transparent oder eingefärbt auszuführen. Erfindungsgemäß kann vorgesehen sein, eine Folie mit erhöhter Wärmeleitfähigkeit einzusetzen, beispielsweise durch Einsatz von Aluminium als Folienmaterial. In besonders bevorzugter Ausführungsform der vorliegenden Erfindung ist vorgesehen, die Folie mehrschichtig aufzubauen, wobei beispielsweise die dem Rahmenteil zugewandte Schicht der Folie einer besonders guten Verbindung zum Rahmenteil dient, während die dem Rahmenteil abgewandte Schicht der Folie einer Stabilitätsverbesserung dient.

In besonders bevorzugter Weise wird die Folie aus Acrylbutadienstyrol (ABS), Polyamid (PA), Polycarbonat (PC), Polystyrol (PS), Polymethylmethacrylat (PMMA), Polypropylen (PP) oder Styrolacrylnitril (SAN) hergestellt und besteht aus diesen Materialien oder deren Gemischen.

In besonders bevorzugter Ausführungsform werden die erfindungsgemäß vorgesehenen Membranen aus Polyamid (PA6, PA66), Polyester (PET, PETG), Polycarbonat (PC), Cellulose, Cellulosederivat oder regenerierter Cellulose hergestellt und bestehen aus diesen Materialien oder deren Gemischen.

Die Erfindung sieht in bevorzugter Weise vor, daß das Bodenteil eine konstante Dicke aufweist und über seine gesamte Größe aus dem gleichen Material hergestellt ist. Die Erfindung sieht jedoch auch vor, daß das Bodenteil nur in den Bereichen die erfindungsgemäß vorgesehene Dicke von maximal 500 µm aufweist, in denen das Bodenteil den Boden der jeweiligen Küvette bildet, während in den Bereichen zwischen den Küvettenböden und/oder in den Bereichen unterhalb der Küvettenseitenwände eine größere Dicke des Bodenteils vorgesehen ist und/oder eine andere Materialzusammensetzung.

Die Erfindung sieht in einer weiteren vorteilhaften Ausgestaltung vor, unterhalb des Bodenteils eine Trägerstruktur vorzusehen, die der Stabilisierung des Bodenteils dient und an diesem oder dem Rahmenteil selbst angeschweißt oder aufgespritzt sein kann. In vorteilhafter Weise läßt diese Trägerstruktur jeweils unterhalb der Küvettenböden ein optisches Fenster frei.

Die Erfindung sieht ferner vor, daß mindestens eine, vorzugsweise zwei, Ecken des Rahmenteils oder des Grundrahmens abgeschrägt oder sonstwie markiert sind, so daß eine eindeutige Orientierung vorgenommen werden kann.

Die Erfindung betrifft auch ein Verfahren zur Herstellung von Microplatten aus mindestens einem Rahmenteil und mindestens einem Bodenteil, wobei das Bodenteil eine Dicke von maximal 500 µm aufweist. Die Erfindung sieht vor, die erfindungsgemäßen Microplatten in einem einstufigen Verfahren herzustellen, wobei das als Folie oder Membran ausgeführte Bodenteil in einer Spritzgieß-Vorrichtung angeordnet und anschließend eine auf 200 bis 300°C, vorzugsweise 250°C, erhitzte und plastifizierte Formmasse zur Herstellung des Rahmenteils in die Spritzgieß-Vorrichtung eingespritzt und auf dem Bodenteil angebracht wird.

Das erfindungsgemäße Verfahren sieht vor, eine dünne, vorgestanzte Folie oder Membran, vorzugsweise mit einer Dicke von 60 µm, in eine Spritzgießform einzulegen und mit dem verwendeten Material für das Rahmenteil zu umspritzen sowie zu verbinden. Das Material kann sowohl transparent als auch hochdeckend weiß oder schwarz eingefärbt sein. Das Fixieren der Folie oder Membran kann sowohl mit Vakuum über kleine Kanalspalte erfolgen, die aber keine sichtbaren Abdrücke am Formteil hinterlassen, als auch über eine elektrostatische Aufladung von Folie beziehungsweise Membran und/oder SpritzgießWerkzeug erfolgen.

Mit diesem Verfahren lassen sich zum Beispiel Polystyrol-, Polymethylmethacrylat-, Polyester- oder Polycarbonatfolien oder Membranen im Dickenbereich von 20 bis 500 µm umspritzen. Dabei ist erfindungsgemäß bevorzugt vorzusehen, daß sich Folie oder Membran und umspritzte Formmasse gut miteinander verbinden. Gegebenenfalls ist die Folie oder Membran erfindungsgemäß in Corona- oder Plasmaprozessen vorzubehandeln beziehungsweise mit geeigneten Haftvermittlern zu aktivieren. Die Temperaturbeständigkeit des Verbundes ist abhängig von der Folie oder Membran und der zur Herstellung des Rahmenteils eingesetzten Formmasse und liegt zum Beispiel bei Polystyrol bei circa 50°C. In bevorzugter Weise ist vorzusehen, daß keine thermische Verformung der Folie oder Membran auftritt, wenn die erhitzte Formmasse (circa 250°C) eingespritzt wird. Das Spritzgießwerkzeug ist so auszulegen, daß die Folie oder Membran nicht verschoben wird.

Mittels geeigneter Folien oder Membranen können mit dieser Verfahrenstechnik sehr vielfältige Zielsetzungen realisiert werden. Dazu gehören bessere Gebrauchseigenschaften, wie hohe Lichtdurchlässigkeit und gute Chemikalienbeständigkeit. Weiterhin können die Folienoberflächen erfindungsgemäß in Plasmaoder Coronaprozessen hydrophylisiert oder hydrophobiert werden und funktionelle Aminogruppen eingebaut werden. Einsatz finden erfindungsgemäß modifizierte Microplatten in Immunoassays und der Zellkultivierung. Erfindungsgemäß können auch Membranen umspritzt werden, die für Zellkulturtechniken und Filtrationsprozesse zu verwenden sind.

Eine eventuell notwendige Sterilisation mit beschleunigten Elektronen oder Gamma-Quanten führt zu keinen nennenswerten Veränderungen in den Materialien.

Die Verwendung eines angepaßten Werkzeugs ermöglicht es, sowohl Klein- als auch Großserien kostengünstig herzustellen. Ohne lange Unterbrechung der Produktion können so verschiedene Folien- und Oberflächengualitäten angefertigt werden.

Weitere vorteilhafte Ausgestaltungen der Erfindung sind den Unteransprüchen zu entnehmen.

Die Erfindung wird anhand von Ausführungsbeispielen und den zugehörigen Figuren näher erläutert.

Die Figuren zeigen:
- Figur 1: eine Draufsicht auf eine Microplatte mit 96 Vertiefungen, welche nicht zur Erfindung gehört,
- Figur 2: einen versetzten Querschnitt durch die Microplatte der Figur 1,
- Figur 3: einen weiteren Querschnitt durch die Microplatte der Figur 1,
- Figur 4: eine Ansicht von unten auf das Bodenteil der Microplatte gemäß Figur 1,
- Figur 5: einen Ausschnitt aus der Figur 4,
- Figur 6: einen Ausschnitt der Querschnittsdarstellung der Figur 2,
- Figur 7: einen Ausschnitt aus der Figur 6,
- Figur 8: eine alternative Ausführungsform mit in einem Grundrahmen angeordneten Rahmenteilen,
- Figur 9: eine Draufsicht auf eine erfindungsgemäße Microplatte mit 384 Vertiefungen und
- Figur 10: eine Draufsicht auf eine erfindungsgemäße Microplatte mit 1536 Vertiefungen.

Die Figur 1 zeigt eine Microplatte 1 mit einem rechteckigen, abgerundete Ecken aufweisenden Rahmenteil 2 aus weißem, deckend eingefärbtem Polystyrol und einem diesem zugeordneten, hier nicht dargestellten, Bodenteil 3. Das Rahmenteil 2 ist einstückig ausgeführt, hält die Standardabmessungen des SBS (Society of Biomolecular Screening)-Standards ein (MIPTEC Standardisierungsentwurf vom 12.10.1996) und weist eine Stützplatte 5 auf, in der Küvetten 7 in Form einer 8x12 Matrix ausgebildet sind. Die im Querschnitt kreisförmigen Küvetten 7 sind nach oben hin offen, und ihre Seitenwände 9 werden durch die Stützplatte 5 ausgeformt. Die Küvettenseitenwände 9 sind zu den jeweils benachbarten Küvettenseitenwänden beziehungsweise der Rahmeninnenwand 19 des Rahmenteils 2 mittels Stegen 11 verbunden. Zwischen den Seitenwänden 9 der Küvetten 7 sind daher Zwischenräume 13 angeordnet. Diese Zwischenräume 13 sind nach oben hin offen, während sie nach unten durch eine Abschlußplatte 15 (Figur 2) verschlossen sind. Das Rahmenteil 2 weist zwei abgeschrägte Ecken 27 auf. Die einzelnen Küvetten 7 sind mittels einer alphanumerischen und numerischen Matrixbeschriftung identifizierbar.

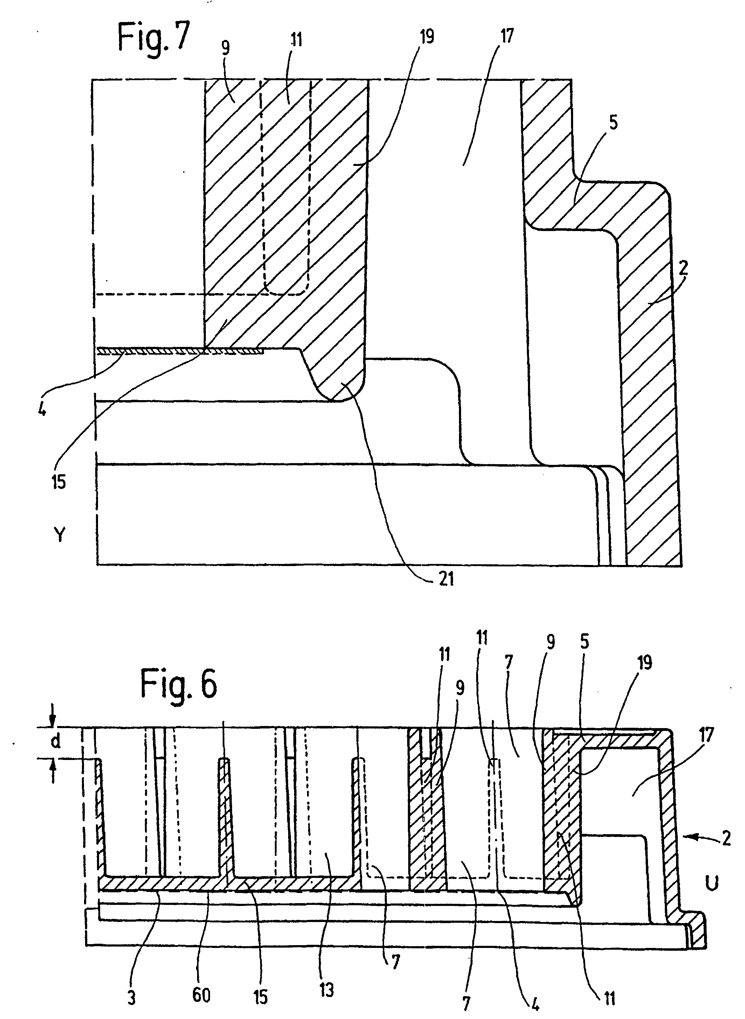

Die Figur 2 stellt einen versetzten Querschnitt durch die Microplatte nach Figur 1 dar. Die Figur 6 zeigt einen Detailausschnitt der Figur 2. Zu erkennen ist, daß die Microplatte 1 in ihrem Randbereich über den gesamten Umfang eine nach unten geöffnete, durch die Stützplatte 5 gebildete hohle Wand 17 aufweist. Die von der Stützplatte 5 gebildete Seitenwände 9 aufweisenden Küvetten 7 sind jeweils über vier Stege 11, die im 90°-Winkel zueinander angeordnet sind, mit den angrenzenden Küvetten 7 oder der Rahmeninnenwand 19 verbunden. Die Rahmeninnenwand 19 bildet somit gleichermaßen die innere, dem Küvettenbereich zugewandte Innenseite der hohlen Wand 17 und umschließt den gesamten Küvettenbereich 65. Zu erkennen sind ferner die nach oben hin offenen und nach unten durch die von der Stützplatte 5 gebildeten Abschlußplatte 15 abgeschlossenen Zwischenräume 13. Die Abschlußplatte 15 schließt lediglich die zwischen den Küvetten 7 gelegenen Zwischenräume 13 nach unten ab, nicht jedoch die Küvetten 7 selbst. Den Figuren 2 und 6 ist ferner zu entnehmen, daß die Stege 11 nicht vollständig die Höhe der Küvetten 7 erreichen, sondern in einem Abstand d unterhalb der Oberkante der Küvetten 7 enden. Selbstverständlich ist es auch möglich, je nach Geometrie der Küvetten, auf die Stege, die Zwischenräume, die Abschlußplatte und/oder die Rahmeninnenwand zu verzichten.

Die Figur 6 verdeutlicht, daß sowohl die nach unten hin offenen Küvetten 7 als auch die Abschlußplatte 15 von einer Folie 3 überdeckt sind. Die Folie 3 weist eine konstante Dicke von 60 µm auf und ist aus Polystyrol hergestellt. Der Lichtdurchtritt wird über den gesamten Innendurchmesser der Küvetten 7 nicht behindert. Die Folie 3 bildet die Böden 4 der Küvetten 7 und überdeckt in den Bereichen 60 die Abschlußplatte 15.

Die Figur 3 stellt einen versetzten Querschnitt quer zu Längsachse der Microplatte nach Figur 1 dar. Die Figur 7 stellt eine Detailansicht der Figur 3 dar. Den beiden Figuren kann ebenfalls die nach unten geöffnete, von der Stützplatte 5 gebildete, über den gesamten Umfang der Microplatte 1 umlaufende hohle Wand 17 entnommen werden. Dargestellt sind ferner die den Küvettenbereich 65 umschließende Rahmeninnenwand 19, die die Küvetten 7 verbindenden Stege 11 sowie die Seitenwände 9 der Küvetten 7. Die Figur 7 zeigt im Detail einen unteren Eckbereich der in Figur 3 gezeigten Microplatte 1. Dargestellt ist die von der Stützplatte 5 des Rahmenteils 2 ausgebildete hohle Wand 17 mit ihrer Rahmeninnenwand 19 sowie dem Steg 11 und der Seitenwand 9 der Küvette 7. Deutlich zu erkennen ist die den gesamten Küvettenbereich 65 umschließende Rahmeninnenwand 19, die über das Niveau der Abschlußplatte 15 hinaus nach unten mit einem Fortsatz 21 hervorspringt. Dargestellt ist ferner das als Folie ausgeführte Bodenteil 3, das lückenlos den gesamten Küvettenbereich 65 nach unten hin überdeckt. Sowohl die Abschlußplatte 15 als auch die nach unten hin geöffneten Küvetten 7 werden durch die Folie überdeckt, so daß die Küvetten einen Flachboden 4 aufweisen.

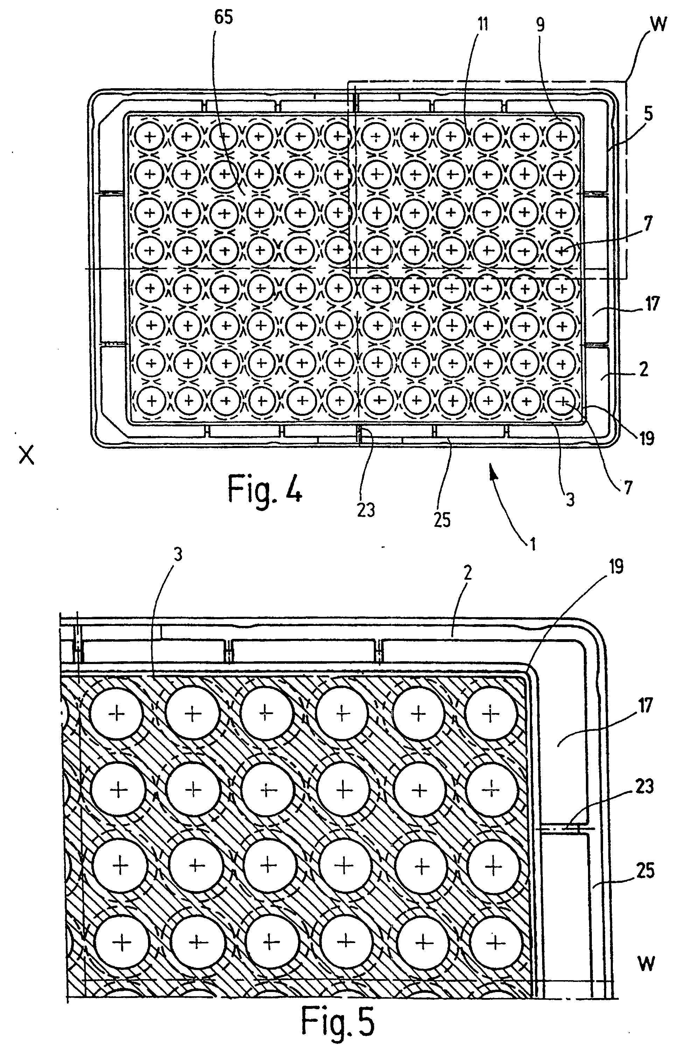

Die Figur 4 stellt die Microplatte 1 von unten her dar. Dargestellt ist die von der Stützplatte 5 des Rahmenteils 2 gebildete hohle Wand 17 mit ihrer Rahmeninnenwand 19. Dargestellt sind ferner Verbindungsstege 23 zwischen der Rahmeninnenwand 19 und der Rahmenaußenwand 25 des Rahmenteils 2. Zu erkennen sind die nach unten hin durch das transparente, als Folie ausgeführte Bodenteil 3 abgedeckten Küvetten 7 mit ihrer Seitenwand 9 sowie den Stegen 11. Zu erkennen ist ferner, daß auch die Abschlußplatte 15, die die Zwischenräume 13 nach unten hin abschließt, durch das Bodenteil 3 überdeckt ist.

Die Figur 5 stellt eine Detailansicht der Figur 4 dar und verdeutlicht, daß das Bodenteil 3 den gesamten Küvettenbereich 65 des Rahmenteils 2 nach unten hin abschließt.

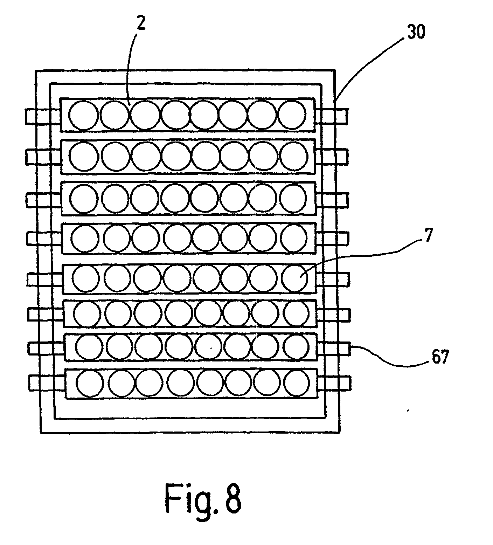

Die Figur 8 stellt eine weitere Ausführungsform dar. In einem in der Mitte hin offenen Grundrahmen 30 sind acht jeweils aus einem acht Küvetten in Streifenform aufweisende Rahmen- 2 und Bodenteil 3 aufgebaute Einheiten mittels der Griffflächen 67 herausnehmbar angeordnet.

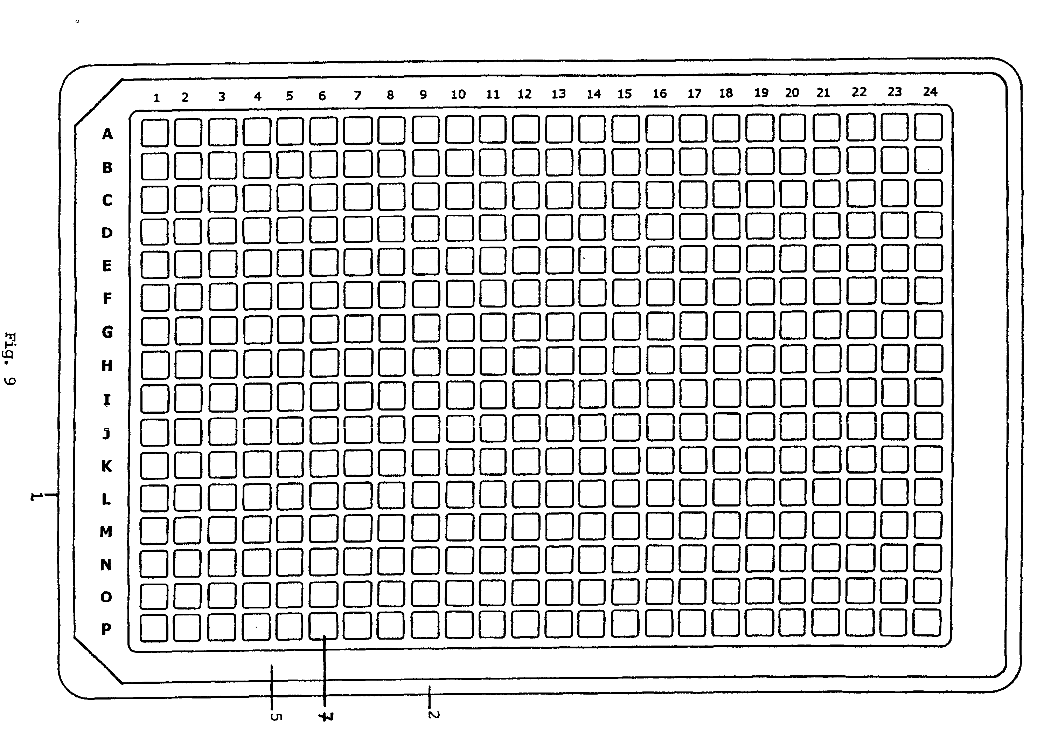

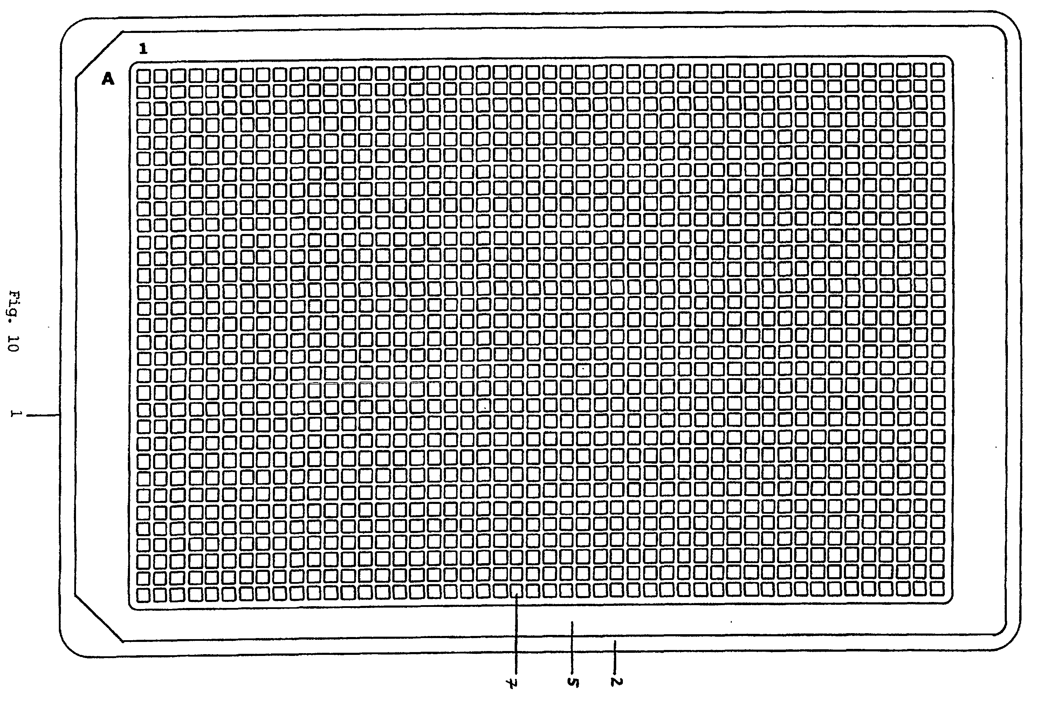

In den Figuren 9 und 10 werden Microplatten dargestellt, die ebenfalls Standardabmessungen aufweisen (SBS), allerdings erheblich mehr Küvetten beinhalten. Gleiche oder funktionsähnliche Elemente werden mit gleichen Bezugsziffern versehen. Die Figur 9 zeigt eine Microplatte 1, die in Form einer 16 x 24 Matrix 384 Küvetten 7 aufweist. Die Küvetten sind im Querschnitt betrachtet quadratisch. Dargestellt ist auch die alphabetische und numerische Beschriftung der Matrix.

Die Figur 10 stellt eine Microplatte 1 dar, die in Form einer 32 x 48 Matrix 1536 Küvetten 7, ebenfalls mit im Querschnitt betrachtet quadratischer Grundfläche, aufweist.

Die Herstellung der Microplatte 1 verlief wie folgt: Eine transparente Polystyrolfolie mit einer Dicke von 60 µm wurde in einem Spritzgießwerkzeug positioniert. Die Anordnung erfolgte in einer Weise, daß die einzuspritzende Formmasse die Folie nicht unterspritzen kann und größeren Staubpartikeln der Zutritt in den Spritzraum verwehrt wird. Zur Herstellung des Rahmenteils 2 wurde weiß eingefärbtes Polystyrol verwendet. Dieses wurde in einem Zylinder zunächst auf 260°C erhitzt und so in einen plastischen Zustand versetzt. Anschließend wurde die plastifizierte Formmasse mittels einer Förderschnecke unter einem Druck von 1.000 bar aus dem Zylinder gedrückt und rasch in das gekühlte, geschlossene Werkzeug eingespritzt, in dem die Folie positioniert worden war. Das Formteil erstarrte unter einer Nach-Druckbeaufschlagung von circa 250 bar, wobei die Schrumpfung des erkaltenden Formteils durch Nachdrücken von plastischer Masse kompensiert wird. Die Nachdruckzeit bis zum Erstarren betrug einige Sekunden, kann aber auch bei großen und dickwandigen Teilen mehrere Minuten betragen. Nach Abkühlen und Erstarren wird das auf die Folie aufgebrachte Formteil ausgestoßen.

## Patentansprüche

1. Microplatte mit mindestens einem Rahmenteil und mindestens einem dem Rahmenteil zugeordneten Bodenteil, wobei das mindestens eine Bodenteil die Böden der Küvetten ausbildet, die Böden der Küvetten eine Dicke von maximal 500 µm aufweisen, das Rahmenteil Standardabmessungen aufweist und mindestens 384 Küvetten beinhaltet, **dadurch gekennzeichnet, daß** das Rahmenteil im Spritzgießverfahren auf das Bodenteil aufgebracht wurde.

2. Microplatte nach Anspruch 1, **dadurch gekennzeichnet, daß** das mindestens eine Bodenteil (3) als Membran oder Folie ausgebildet ist.

3. Microplatte nach einem der vorhergehenden Ansprüche, **dadurch gekennzeichnet, daß** die Böden (4) als Membran ausgebildet sind.

4. Microplatte nach Anspruch 3, **dadurch gekennzeichnet, daß** die Membran aus Polyamid, Polyester, Polycarbonat, Cellulose, Cellulosederivat oder regenerierter Cellulose aufgebaut ist.

5. Microplatte nach einem der Ansprüche 1 bis 2, **dadurch gekennzeichnet, daß** die Böden (4) als Folie ausgebildet sind.

6. Microplatte nach Anspruch 5, **dadurch gekennzeichnet, daß** die Folie aus Acrylbutadienstyrol, Polyamid, Polycarbonat, Polystyrol, Polymethylmethacrylat, Polypropylen oder Styrolacrylnitril aufgebaut ist.

7. Microplatte nach einem der vorhergehenden Ansprüche, **dadurch gekennzeichnet, daß** die Böden (4) oder Bodenteile (3) eine Dicke von 20 bis 500 µm, vorzugsweise 60 µm, aufweisen.

8. Microplatte nach einem der vorhergehenden Ansprüche, **dadurch gekennzeichnet, daß** das mindestens eine Rahmenteil (2) weiß oder schwarz eingefärbt, transparent oder naturfarben ist.

9. Microplatte nach einem der vorhergehenden Ansprüche, **dadurch gekennzeichnet, daß** das mindestens eine Rahmenteil (2) eine erhöhte Wärmeleitfähigkeit aufweist.

10. Microplatte nach einem der vorhergehenden Ansprüche, **dadurch gekennzeichnet, daß** das mindestens eine Rahmenteil (2) zusätzliche Metallspäne oder Ruß enthält.

11. Microplatte nach einem der vorhergehenden Ansprüche, **dadurch gekennzeichnet, daß** die Folie transparent oder eingefärbt ist.

12. Microplatte nach einem der vorhergehenden Ansprüche, **dadurch gekennzeichnet, daß** die Folie eine erhöhte Wärmeleitfähigkeit aufweist.

13. Microplatte nach einem der vorhergehenden Ansprüche, **dadurch gekennzeichnet, daß** die Folie mehrschichtig aufgebaut ist.

14. Microplatte nach einem der vorhergehenden Ansprüche, **dadurch gekennzeichnet, daß** das mindestens eine Rahmenteil (2) der Microplatte (1) in einem in der Mitte offenen Grundrahmen (30) angeordnet ist.

15. Microplatte nach einem der vorhergehenden Ansprüche, **dadurch gekennzeichnet, daß** das mindestens eine Rahmenteil (2) oder der Grundrahmen (30) im wesentlichen rechteckig sind.

16. Microplatte nach einem der vorhergehenden Ansprüche, **dadurch gekennzeichnet, daß** die Küvetten (7) in dem Rahmenteil (2) in Matrixform oder in Reihe angeordnet sind.

17. Microplatte nach einem der vorhergehenden Ansprüche, **dadurch gekennzeichnet, daß** das mindestens eine Rahmenteil (2) und/oder der Grundrahmen (30) mindestens eine abgeschrägte Ecke (27) aufweisen.

18. Microplatte nach einem der vorhergehenden Ansprüche, **dadurch gekennzeichnet, daß** die Küvetten (7) im Querschnitt quadratisch, sechseckig oder kreisförmig sind.

19. Microplatte nach einem der vorhergehenden Ansprüche, **dadurch gekennzeichnet, daß** unterhalb des mindestens einen Bodenteils (3) eine, vorzugsweise gitterartige, Trägerstruktur angeordnet ist.

20. Verfahren zur Herstellung von mindestens ein Rahmen- und mindestens ein Bodenteil aufweisenden Microplatten, wobei das mindestens eine Rahmenteil eine Vielzahl von Küvetten aufweist, insbesondere nach einem der vorhergehenden Ansprüche, wobei eine Folie oder eine Membran einer Dicke von maximal 500 µm in einem Spritzgießwerkzeug angeordnet, das Material für das Rahmenteil (2) auf 200 bis 300°C erhitzt und so plastifiziert, das plastifizierte Material des Rahmenteils (2) unter einem Druck von 200 bis 1.300 bar, vorzugsweise 1.000 bar, in das Spritzgießwerkzeug eingespritzt, abgekühlt und erstarrt wird.

21. Verfahren nach Anspruch 20, **dadurch gekennzeichnet, daß** das Rahmenteil (2) in dem Spritzgießwerkzeug unter einem Nachdruck von 100 bis 500 bar erstarrt.

## Claims

1. Microplate with at least one frame part and at least one base part associated with the frame part, whereby at least one base part forms the bases of the cells, the bases of the cells have a maximum thickness of 500 µm, the frame part has standard dimensions and contains at least 384 cells, **characterised in that** the frame part is applied by injection moulding to the base part which has a maximum thickness of 500 µm.

2. Microplate according to claim 1, **characterised in that** at least one base part (3) is formed as a diaphragm or foil.

3. Microplate according to one of the preceding claims, **characterised in that** the bases (4) are formed as a diaphragm.

4. Microplate according to claim 3, **characterised in that** the diaphragm is built up of polyamide, polyester, polycarbonate, cellulose, cellulose derivative or a regenerated cellulose.

5. Microplate according to one of the claims 1 to 2, **characterised in that** the bases (4) are formed as a foil.

6. Microplate according to claim 5, **characterised in that** the foil is built up of acrylobutadiene-styrene, polyamide, polycarbonate, polystyrene, polymethylmethacrylate, polypropylene or styrene-acrylonitrile.

7. Microplate according to one of the preceding claims, **characterised in that** the bases (4) or base part (3) have a thickness between 20 and 500 µm, preferably 60 µm.

8. Microplate according to one of the preceding claims, **characterised in that** at least one frame part (2) is tinted white or black, is transparent or of a natural colour.

9. Microplate according to one of the preceding claims, **characterised in that** at least one frame part (2) has enhanced heat conductivity.

10. Microplate according to one of the preceding claims, **characterised in that** at least one frame part (2) contains additional metal swarf or soot.

11. Microplate according to one of the preceding claims, **characterised in that** the foil is transparent or tinted.

12. Microplate according to one of the preceding claims, **characterised in that** the foil has enhanced heat conductivity.

13. Microplate according to one of the preceding claims, **characterised in that** the foil is built up in multiple layers.

14. Microplate according to one of the preceding claims, **characterised in that** at least one frame part (2) of the microplate (1) is arranged in the base frame (30) open in the centre.

15. Microplate according to one of the preceding claims, **characterised in that** at least one frame part (2) or the base frame (30) are essentially rectangular.

16. Microplate according to one of the preceding claims, **characterised in that** the cells (7) are arranged in the frame part (2) in a matrix form or in a row.

17. Microplate according to one of the preceding claims, **characterised in that** at least one frame part (2) and/or the base frame (30) have at least one chamfered corner (27).

18. Microplate according to one of the preceding claims, **characterised in that** the cells (7) have a square, hexagonal or circular cross-section.

19. Microplate according to one of the preceding claims, **characterised in that** at least a preferably lattice-like carrier structure is arranged underneath at least one base part (3).

20. A process of producing microplates having at least one frame part and at least one base part, whereby at least the one frame part has a plurality of cells, especially according to one of the preceding claims, whereby a foil or a diaphragm with a maximum thickness of 500 µm is arranged in an injection moulding tool, the material for the frame part (2) is heated to between 200° and 300°C and thus plasticised, the plasticised material of the frame part (2) being injected into the injection moulding tool at a pressure of between 200 and 1300 bars, preferably 1000 bars, cooled down and allowed to set.

21. A process according to claim 20, **characterised in that** the frame part (2) is allowed to set in the injection moulding tool under a dwell pressure of between 100 and 500 bars.

## Revendications

1. Microplaquette comprenant au moins un élément de cadre et au moins un élément de fond associé à l'élément de cadre, ledit au moins un élément de fond constituant les fonds des cuvettes, qui présentent une épaisseur de 500 microns maximum, l'élément de cadre présentant des dimensions standard et contenant au moins 384 cuvettes, **caractérisée en ce que** l'élément de cadre a été déposé par un procédé de moulage par injection sur l'élément de fond d'une épaisseur maximale de 500 microns.

2. Microplaquette selon la revendication 1, **caractérisée en ce que** ledit au moins un élément de fond (3) est conçu sous la forme d'une membrane ou d'un film.

3. Microplaquette selon l'une quelconque des revendications précédentes, **caractérisée en ce que** les fond (4) se présentent sous la forme d'une membrane.

4. Microplaquette selon la revendication 3, **caractérisée en ce que** la membrane est élaborée à partir de polyamide, de polyester, de polycarbonate, de cellulose, d'un dérivé de cellulose ou de cellulose régénérée.

5. Microplaquette selon l'une quelconque des revendications 1 à 2, **caractérisée en ce que** les fonds (4) sont conçus sous la forme d'un film.

6. Microplaquette selon la revendication 5, **caractérisée en ce que** le film est élaboré à partir d'acryl butadiène styrol, de polyamide, de polycarbonate, de polystyrol, de polyméthacrylate de méthyle, polypropylène ou de styrène-acrylonitrile.

7. Microplaquette selon l'une quelconque des revendications précédentes, **caractérisée en ce que** les fonds (4) ou éléments de fond (3) présentent une épaisseur de 20 à 500 microns, de préférence 60 microns.

8. Microplaquette selon l'une quelconque des revendications précédentes, **caractérisée en ce que** ledit au moins un élément de cadre (2) est coloré en blanc ou en noir, transparent ou de couleur naturelle.

9. Microplaquette selon l'une quelconque des revendications précédentes, **caractérisée en ce que** ledit au moins un élément de cadre (2) présente une conductivité thermique accrue.

10. Microplaquette selon l'une quelconque des revendications précédentes, **caractérisée en ce que** ledit au moins un élément de cadre (2) contient de la limaille de métal ou de la suie en outre.

11. Microplaquette selon l'une quelconque des revendications précédentes, **caractérisée en ce que** le film est transparent ou coloré.

12. Microplaquette selon l'une quelconque des revendications précédentes, **caractérisée en ce que** le film présente une conductivité thermique accrue.

13. Microplaquette selon l'une quelconque des revendications précédentes, **caractérisée en ce que** le film est constitué de plusieurs couches.

14. Microplaquette selon l'une quelconque des revendications précédentes, **caractérisée en ce que** ledit au moins un élément de cadre (2) de la microplaquette (1) est disposé dans un cadre de base (30) ouvert en son centre.

15. Microplaquette selon l'une quelconque des revendications précédentes, **caractérisée en ce que** ledit au moins un élément de cadre (2) ou le cadre de base (30) sont globalement rectangulaires.

16. Microplaquette selon l'une quelconque des revendications précédentes, **caractérisée en ce que** les cuvettes (7) sont disposés dans l'élément de cadre (2) sous forme de matrice ou en lignes.

17. Microplaquette selon l'une quelconque des revendications précédentes, **caractérisée en ce que** ledit au moins un élément de cadre (2) et/ou le cadre de base (30) présentent au moins un angle biseauté (27).

18. Microplaquette selon l'une quelconque des revendications précédentes, **caractérisée en ce que** les cuvettes (7), en coupe transversale, sont de forme carrée, hexagonale ou circulaire.

19. Microplaquette selon l'une quelconque des revendications précédentes, **caractérisée en ce qu'**une structure porteuse, de préférence en réseau, est disposée en dessous dudit au moins un élément de fond (3).

20. Procédé pour la fabrication de micropaquettes présentant au moins un élément de cadre et au moins un élément de fond, ledit au moins un élément de cadre présentant une pluralité de cuvettes, notamment selon l'une quelconque des revendications précédentes, dans lequel on dispose un film ou une membrane d'une épaisseur de 500 microns maximum dans un outil de moulage par injection, on chauffe le matériau pour l'élément de cadre (2) à une température de 200 à 300°C entraînant sa plastification, on injecte le matériau plastifié de l'élément de cadre (2) sous une pression de 200 à 1.300 bars, 1.000 bars de préférence, dans l'outil de moulage par injection, on le refroidit et le solidifie.

21. Procédé selon la revendication 20, **caractérisée en ce qu'**on solidifie l'élément de cadre (2) dans l'outil de moulage par injection sous une pression de 100 à 500 bars.
